# EUROPÄISCHE PATENTSCHRIFT

(11) **EP 1 138 449 B1**
(45) Veröffentlichungstag und Bekanntmachung des Hinweises auf die Patenterteilung: **24.08.2005**
(21) Anmeldenummer: 01107093.5
(22) Anmeldetag: 22.03.2001
(51) Int. Cl.: B25J 19/00, B25J 9/14, B25J 9/10, F15B 15/10

(54) **Vorrichtung zum Gewichtsausgleich eines Roboters dank eines druckbeaufschlagten Schlauchelementes**
Device for balancing the weight of a robot thanks to an inflatable hose
Dispositif pour équilibrer un robot grâce à un tuyau flexible gonflable

(30) Priorität: 28.03.2000 DE 10015411
(43) Veröffentlichungstag der Anmeldung: 04.10.2001
(73) Patentinhaber: KUKA Roboter GmbH, 86165 Augsburg (DE)
(72) Erfinder: Bohlken, Wolfgang, 86316 Friedberg (DE)
(74) Vertreter: Lempert, Jost

(56) Entgegenhaltungen:
- EP-A- 0 161 750
- WO-A-96/31325
- FR-A- 2 560 102
- US-A- 4 819 547

## Beschreibung

Die Erfindung betrifft einen Roboter nach dem Oberbegriff des Anspruchs 1.

An einem Roboter sind Gewichtsausgleiche vorgesehen, damit die Motoren für die einzelnen Elemente lediglich die Bewegungsarbeit verrichten, durch Gravitation bedingte Drehmomente und Kräfte aber nicht oder nur in geringen Umfang kompensieren müssen. Dies gilt insbesondere für die Schwinge eines Roboters und deren Bewegung um die horizontale A2-Achse relativ zu Sockel und Karussell eines Roboters.

Zum Gewichtsausgleich sind Gegengewichte, mechanische Federn, Fluidfedern in Form von Pneumatik- und Hydraulikzylindern mit axial in diesen beweglichen Kolben, magnetische Systeme, sowie Hebel- und Seilzugsysteme vorgesehen bzw. vorgeschlagen worden.

Die bekannten Gewichtsausgleiche weisen jeweils Nachteile auf: So benötigen Gegengewichte einen hohen Platzbedarf und erhöhen darüber hinaus die Masse und Trägheit des gesamten Roboters. Mechanische Federn bauen, wenn sie die notwendigen Kräfte aufbringen sollen, relativ groß, haben also große Baugrößen. Hebel- und Seilzugsysteme sind kompliziert und aufwändig. Magnetische Systeme bauen ebenfalls relativ groß.

Die WO 96/31325 zeigt einen Roboter mit Antriebsmotoren zum Antrieb und damit zur Bewegung der einzelnen Roboterelemente, wie beispielsweise der Schwinge. Weiterhin weist sie einen so bezeichneten statischen hydraulischen Massenausgleich in Form eines Zylinders mit einem in diesen beweglichen Kolben als Gewichts-Ausgleich im Sinne der Anmeldungsunterlagen auf. Nachteilig ist, dass Fluidfedern nicht wartungsfrei sind und ggf. den Anschluss an ein Druckmedium, beispielsweise in einem Druckbehälter benötigen.

Die FR-A- 2 560 102 sowie US-A-4 819 547 offenbaren ein Betätigungselement für Roboter mit innen druchbeaufschlagtem Schlauchelement.

Der Erfindung liegt die Aufgabe zugrunde, einen gattungsgemäßen Roboter dahingehend weiterzubilden, dass ein Gewichts-Ausgleich unter Vermeidung der genannten Nachteile bei geringem Platzbedarf, geringem Gewicht, hoher Flexibilität der Anwendung unter Vermeidung der Gefahr der Verschmutzung der Umwelt, der Umgebung reinraumtauglich ausgebildet wird.

Erfindungsgemäß wird die genannte Aufgabe mit einem gattungsgemäßen Roboter durch die kennzeichnenden Merkmale des Anspruchs 1 gelöst.

Neben einem geringen Platzbedarf durch eine aufgrund der erfindungsgemäßen Ausgestaltung schlanke Bauform weist die erfindungsgemäße Vorrichtung ein geringes Gewicht auf und ist darüber hinaus wartungsfrei. Sie ist darüber hinaus weitgehend verschleißfrei. Aufgrund der dichten Ausgestaltung der Schlauchelemente ist sie auch reinraumtauglich.

Weiterhin ist sie einfach zu fertigen und insgesamt kostengünstig. Darüber hinaus sind keine Schmierstoffe erforderlich. Eine hohe Flexibilität wird bei der erfindungsgemäßen Vorrichtung dadurch erreicht, dass die Länge in Anpassung an den vorgesehenen Einsatzzweck leicht gewählt werden kann und der Fülldruck im Hinblick auf den vorgesehenen Einsatzzweck leicht angepasst werden kann. Durch die schlanke Bauform wird darüber hinaus ermöglicht, dass die erfindungsgemäße Vorrichtung weitgehend in eine Schwinge oder einen Arm eines Roboters eingebaut, das heißt in dessen Tragelementen, wie Wänden eingeschlossen werden kann.

Die erfindungsgemäßen vorgesehenen Schlauchelemente können in verschiedener Weise ausgestaltet sein. In äußerst bevorzugter Ausgestaltung ist vorgesehen, dass die Schlauchelemente einen flexiblen gasdichten Innenschlauch und diesen umgebende zugfeste Fasern aufweisen, wobei insbesondere die zugfesten Fasern unter einem endlichen Winkel ungleich 0° zur Achse des Schlauchelements ausgerichtet sind. Vorteilhafterweise ist eine Faserstruktur vorgesehen, bei der die einzelnen Fasern sich kreuzen, so dass sie rautenförmig angeordnet sind. Obwohl nicht unbedingt notwendig, sieht die Erfindung in weiterer bevorzugter Ausgestaltung vor, dass zusätzlich zu dem von der Faserstruktur umgebenen gasdichten Innenschlauch ein beide umgebender äußerer flexibler Mantel vorgesehen ist, der Faserstruktur und gasdichten Innenschlauch gegen Einwirkung von außen schützt.

Während es darüber hinaus verschiedene Anordnungsmöglichkeiten der Schlauchelemente im Rahmen einer erfindungsgemäßen Vorrichtung gibt, die Schlauchelemente beispielsweise dicht als Paket nebeneinander gepackt sein können, sieht eine äußerst bevorzugte Ausgestaltung vor, dass die Schlauchelemente eine ihnen gemeinsame Mittelachse koaxial umgeben. In weiterer Ausbildung ist vorgesehen, dass die Befestigungselemente Platten aufweisen, mit denen die Schlauchelemente zugfest, aber lösbar verbunden sind, wobei insbesondere die Befestigungselemente Befestigungsösen zur Befestigung an Teilen eines Roboters aufweisen. Durch derartig ausgestaltete Befestigungselemente kann die erfindungsgemäße Vorrichtung einfach und leicht und insbesondere auch wieder lösbar an den Teilen eines Roboters befestigt werden. Eine äußerst bevorzugte Ausgestaltung der Erfindung sieht vor, dass eine Befestigungsöse mit dem Karussell eines Roboters verbunden ist und die andere Befestigungsöse an der Schwinge eines Roboters exzentrisch zu dessen A2-Achse angelenkt ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im einzelnen erläutert ist. Dabei zeigt bzw. zeigen:
- Fig. 1: eine Darstellung von Karussell und Schwinge eines Roboters zusammen mit einer erfindungsgemäßen Vorrichtung; und
- Fig. 2 u.d 3: zwei Varianten der Kupplung mehrerer Schlauchelemente in einem Schlauchpaket entsprechend einem Schnitt A-A der Fig. 1 mit Sicht entsprechend der Pfeile A, A.

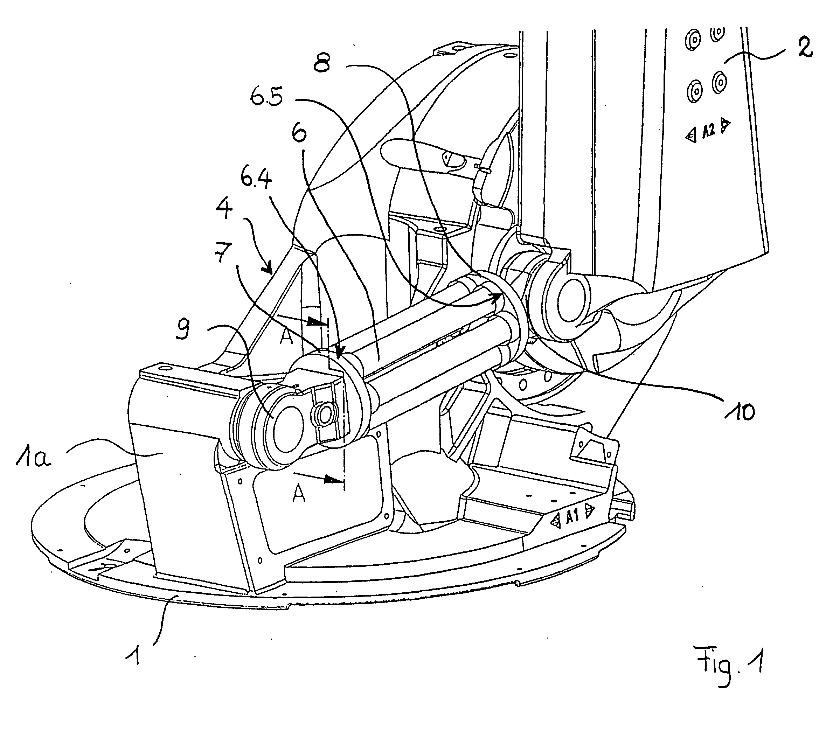

Die Figur 1 zeigt den Drehteller oder das Karussell 1 eines Roboters. Ein solches Karussell 1 ist auf einem Sockel (nicht dargestellt) eines Roboters angeordnet und relativ zu diesem um die vertikale A1-Achse drehbar. Am Karussell 1 eines Roboters ist die Schwinge 2 angelenkt und um die horizontale A2-Achse des Roboters an ihrem unteren Ende verschwenkbar. Zum Verschwenken der Schwinge 2 ist ein Motor vorgesehen. Damit der Motor beim Verschwenken der Schwinge 2 lediglich die Verschwenk-Arbeit ausführen muss, nicht aber durch Gravitation bedingte Kräfte bzw. Drehmomente in voller Höhe kompensieren muss, ist regelmäßig bei einem Roboter zwischen Karussell 1 und Schwinge 2, an dieser exzentrisch zur Achse 2 angelenkt, ein Gewichtsausgleich 4 vorgesehen.

Der Gewichtsausgleich 4 weist im dargestellten Ausführungsbeispiel eine Vorrichtung mit einer Mehrzahl von parallel zueinander angeordneten Schlauchelementen 6 auf, die vorzugsweise, wie dies beim dargestellten Ausführungsbeispiel der Fall ist, koaxial zu einer von ihnen umgebenen Achse B angeordnet sind. Die Schlauchelemente 6 sind mit ihren Enden zugfest an Anschlussplatten 7, 8 befestigt, die wiederum einstückig oder aber fest mit Befestigungsösen 9, 10 verbunden sind. Die Befestigungsöse 9 ist fest am Karussell 1 bzw. einem konstruktiven Element la desselben angelenkt. Die Befestigungsöse 10 ist an der Schwinge 2 angelenkt und zwar, wie gesagt, exzentrisch zur A2-Achse.

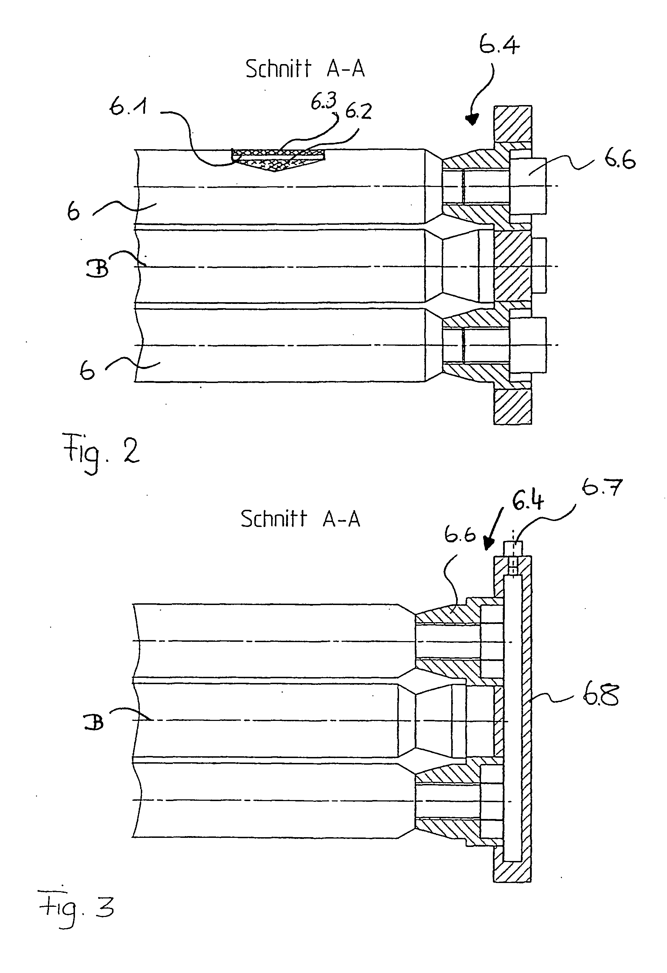

Die Schlauchelemente 6 weisen einen gasdichten Innenschlauch 6.1 auf. Der Innenschlauch 6.1 ist von einem rautenförmigen Muster zugfester Fasern 6.2 umgeben, welches im dargestellten Ausführungsbeispiel wiederum von einem Schutzmantel 6.3 umschlossen ist. Die Schlauchteile 6.1 bis 6.2 sind an ihren Stirnseiten zugfest mit Anschlusselementen 6.4 und 6.5 verbunden. Eines der Anschlusselemente 6.5 ist vollständig geschlossen ausgeführt. Bei einem anderen Anschlusselement 6.4 ist ein Anschluss 6.6 zur Befüllung des Schlauchelements 6 vorgesehen. Damit können sie mit entsprechenden Schraubgewindestiften an den Anschlussplatten 7, 8 festgeschraubt werden und hierdurch ist eine lösbare Befestigung gegeben, so dass die Schlauchelemente 6 beispielsweise zur Drucküberprüfung bzw. zum Nachfüllen wieder von den Anschlusselementen 7, 8 gelöst werden können. Bei der Ausgestaltung der Fig. 2 sind die Schlauchelemente 6 jeweils einzeln und damit gegebenenfalls auch mit unterschiedlichem Druck befüllbar. Ein Vorteil liegt darin, dass bei Ausfall eines Schlauches das System noch funktionstüchtig ist. Es ist aber ein größerer Aufwand für die einzelne Befüllung notwendig. Bei der Ausgestaltung der Fig. 3 ist eine gemeinsame Befüllung über eine Verbindung 6.8 einen gemeinsamen Einlass 6.7 und der Anschluss 6.6 vorgesehen.

Die Schlauchelemente 6 stehen unter Innendruck und sind hierzu mit einem Gas gefüllt. Durch den Überdruck im Inneren der Schlauchelemente weiten diese sich radial auf und verkürzen sich, wie dies in der Figur 2 in durchgezogenen Linien dargestellt ist. Wird auf das Schlauchelement 6 ein Zug ausgeübt, wenn beispielsweise die Schwinge sich aus der in Fig. 1 dargestellten vertikalen Stellung in einem mehr oder minder zur Horizontalen hin geneigten Stellung bewegt, so denen sich die Schlauchelemente 6 und reduzieren dabei ihren Durchmesser im Mittelbereich, wie dies in der Figur 2 gestrichelt dargestellt ist.

Durch die Erfindung wird ein wartungsarmer und nahezu verschleißarmer Gewichtsausgleich geschaffen, der geringen Platzbedarf und geringes Gewicht bei einer hohen Flexibilität hinsichtlich der Anwendungsmöglichkeit aufweist, da der Fülldruck und die Länge der Schlauchelemente in unterschiedlicher Weise eingestellt werden können.

### Bezugszeichenliste

- 1: Karussell
- 1a: konstruktives Element
- 2: Schwinge
- 4: Gewichtsausgleich
- 6: Schlauchelemente
- 6.1: Innenschlauch
- 6.2: Fasern
- 6.3: Schutzmantel
- 6.4: Anschlusselemente
- 6.5: Anschlusselemente
- 6.6: Anschluss
- 6.7: Einlass
- 6.8: Verbindung
- 7: Anschlussplatte
- 8: Anschlussplatte
- 9: Befestigungsösen
- 10: Befestigungsösen

## Patentansprüche

1. Roboter mit mindestens einem Motor zum Verschwenken eines Elements des Roboters und mit einer Vorrichtung zur Kompensation von durch Gravitation bedingte Drehmomente zum Gewichtsausgleich, wobei die Gewichtsausgleichs-Vorrichtung parallel angeordnete und mit ihren Enden an gemeinsamen Befestigungselementen (7, 9; 8, 10) befestigte zugfeste, innendruckbeaufschlagte Schlauchelemente (6) aus einem flexiblen gasdichten Innenschlauch (6.1) und diesen umgebende zugfeste Fasern (6.2) aufweist, wobei Innenschlauch und zugfeste Fasern jeweils gemeinsam an Befestigungselementen (7, 9; 8, 10) befestigt sind.

2. Vorrichtung nach Anspruch 1 **dadurch gekennzeichnet, dass** die Schlauchelemente einen flexiblen gasdichten Innenschlauch (6.1) und diesen umgebende zugfeste Fasern (6.2) aufweisen.

3. Vorrichtung nach Anspruch 2, **dadurch gekennzeichnet, dass** die zugfesten Fasern (6.2) unter einem endlichen Winkel ungleich 0° zur Achse des Schlauchelements (6) ausgerichtet sind.

4. Vorrichtung nach Anspruch 3 oder 4, **dadurch gekennzeichnet, dass** die Fasern (6.2) rautenförmig angeordnet sind.

5. Vorrichtung nach einem der Ansprüche 1 bis 5, **dadurch gekennzeichnet, dass** die Schlauchelemente (6) einen äußeren flexiblen Schutzmantel (6.3) aufweisen.

6. Vorrichtung nach einem der Ansprüche 1 bis 6, **dadurch gekennzeichnet, dass** die Schlauchelemente (6) eine ihnen gemeinsame Mittelachse (B) koaxial umgeben.

7. Vorrichtung nach einem der vorangehenden Ansprüche, **dadurch gekennzeichnet, dass** die Befestigungselemente Platten (7, 8) aufweisen, mit denen die Schlauchelemente zugfest, aber lösbar verbunden sind.

8. Vorrichtung nach einem der Ansprüche 1 bis 8, **dadurch gekennzeichnet, dass** die Befestigungselemente Befestigungsösen (9, 10) zur Befestigung mit Teilen eines Roboters aufweisen.

9. Vorrichtung nach Anspruch 9, **dadurch gekennzeichnet, dass** eine Befestigungsöse (9) mit dem Karussell eines Roboters verbunden ist und die andere Befestigungsöse (10) an der Schwinge (2) eines Roboters exzentrisch zu 35 dessen A2-Achse angelenkt ist.

## Claims

1. Robot with at least one motor for swivelling an element of the robot and with a device for compensating the torques caused by gravity for weight compensation purposes, the weight compensating device has parallel, tension-proof, internally pressurized hose elements (6), fixed by their ends to common fixing elements (7, 9; 8, 10), comprising a flexible, gas-tight inner hose (6.1) and tension-proof fibres (6.2) surrounding the same, the inner hose and tension-proof fibres being in each case jointly fixed to fixing elements (7, 9; 8, 10).

2. Device according to claim 1, **characterized in that** the hose elements have a flexible, gas-tight inner hose (6.1) and tension-proof fibres (6.2) surrounding the same.

3. Device according to claim 2, **characterized in that** the tension-proof fibres (6.2) are oriented under a finite angle not equal to 0° to the axis of the hose element (6).

4. Device according to claim 3 or 4, **characterized in that** the fibres (6.2) are arranged in diamond-shaped manner.

5. Device according to one of the claims 1 to 5, **characterized in that** the hose elements (6) have an outer, flexible protective jacket (6.3).

6. Device according to one of the claims 1 to 6, **characterized in that** the hose elements (6) coaxially surround a central axis (B) common thereto.

7. Device according to one of the preceding claims, **characterized in that** the fixing elements have plates (7, 8) to which the hose elements are connected in tension-proof, but detachable manner.

8. Device according to one of the claims 1 to 8, **characterized in that** the fixing elements have fixing rings (9, 10) for fixing to parts of a robot.

9. Device according to claim 8, **characterized in that** one fixing ring (9) is connected to the carrousel of a robot and the other fixing ring (10) is articulated to the rocker arm (2) of a robot eccentrically to the A2 axis thereof.

## Revendications

1. Robot présentant au moins un moteur pour le basculement d'un élément du robot et un dispositif de compensation de couples de rotation déterminés par la gravitation pour l'équilibrage du poids, dans lequel le dispositif d'équilibrage de poids présente des éléments de conduits (6) résistants à la traction alimentés en pression interne disposés parallèles et fixés par leurs extrémités à des éléments de fixation communs (7,9 ; 8,10), conduits consistant en un conduit intérieur (6.1) flexible et étanche aux gaz et en fibres (6.2) résistantes à la traction entourant celui-ci, dans lequel le conduit intérieur et les fibres résistantes à la traction sont à chaque fois fixés ensemble à des éléments de fixation (7,9 ; 8,10).

2. Dispositif selon la revendication 1, **caractérisé en ce que** les éléments de conduits se composent d'un conduit intérieur (6.1) flexible et étanche aux gaz et de fibres (6.2) résistantes à la traction entourant celui-ci.

3. Dispositif selon la revendication 2, **caractérisé en ce que** les fibres (6.2) résistantes à la traction sont orientées selon un angle fini différent de 0° par rapport à l'axe de l'élément de conduit (6).

4. Dispositif selon la revendication 2 ou 3, **caractérisé en ce que** les fibres (6.2) sont disposées en losanges.

5. Dispositif selon l'une quelconque des revendications 1 à 4, **caractérisé en ce que** les éléments de conduits (6) présentent une enveloppe protectrice (6.3) extérieure flexible.

6. Dispositif selon l'une quelconque des revendications 1 à 5, **caractérisé en ce que** les éléments de conduits (6) entourent un axe médian (B) coaxial qui leur est commun.

7. Dispositif selon l'une quelconque des revendications précédentes, **caractérisé en ce que** les éléments de fixation présentent des plaques (7,8) auxquelles les éléments de conduits sont reliés résistants à la traction, mais détachables.

8. Dispositif selon l'une quelconque des revendications 1 à 7, **caractérisé en ce que** les éléments de fixation présentent des oeillets de fixation (9,10) pour la fixation à des parties d'un robot.

9. Dispositif selon la revendication 8, **caractérisé en ce qu'**un oeillet de fixation (9) est relié au carrousel d'un robot et **en ce que** l'autre oeillet de fixation (10) est articulé au bras oscillant (2) d'un robot de manière excentrée par rapport à l'axe A2 de celui-ci.
